# FASCICULE DE BREVET EUROPEEN

(11) **EP 3 881 498 B1**
(45) Date de publication et mention de la délivrance du brevet: **24.07.2024**
(21) Numéro de dépôt: 19817392.4
(22) Date de dépôt: 06.11.2019
(51) Int. Cl.: H04L 43/103

(54) **PROCÉDÉ DE GESTION DE LA FRÉQUENCE D'ÉMISSION DE MESSAGES SUR UNE LIAISON DE COMMUNICATION**
VERFAHREN ZUR VERWALTUNG DER NACHRICHTENÜBERTRAGUNGSFREQUENZ AUF EINER KOMMUNIKATIONSVERBINDUNG
METHOD FOR MANAGING THE FREQUENCY OF MESSAGE TRANSMISSION ON A COMMUNICATION LINK

(30) Priorité: 12.11.2018 FR 1860433
(43) Date de publication de la demande: 22.09.2021
(73) Titulaire: Orange, 92130 Issy-les-Moulineaux (FR)
(72) Inventeur: FONTAINE, Fabrice, 92326 Châtillon Cedex (FR); MARCHAND, Hervé, 92326 Châtillon Cedex (FR)
(86) Numéro de dépôt international: PCT/FR2019/052625
(87) Numéro de publication internationale: WO 2020/099761

(56) Documents cités:
- US-A1- 2012 303 774
- US-B1- 8 903 458

## Description

### Domaine technique

L'invention se rapporte au domaine des télécommunications.

L'invention se rapporte à un procédé de gestion des instants d'émission de messages, sur une liaison de communication, par un premier dispositif à destination d'un deuxième dispositif. L'invention s'applique tout particulièrement à un procédé de gestion de la fréquence d'émission d'un même type de message sur une liaison de communication.

L'invention s'applique tout particulièrement aux systèmes dans lesquels au moins un dispositif est alimenté par une source d'énergie embarquée telle qu'une batterie, une pile, etc.

Les dispositifs visés ci-dessus sont quelconques à savoir un smartphone, une tablette numérique, un décodeur, etc.

L'invention s'applique à tous les systèmes dans lesquels les dispositifs émettent à des instants précis un même type de message. L'envoi de messages à des instants précis vise des messages transmis périodiquement ou non. Par exemple, si la communication s'effectue selon la norme UPnP (sigle de « Universal Plug And Play »), un message du type précité peut être le message SSDP : ALIVE émis toutes 1800 secondes par un dispositif.

### Etat de la technique

Lorsqu'un premier et un deuxième dispositif contribuent à la réalisation d'une tâche informatique, il est parfois nécessaire de connaître l'état courant de la connexion entre ces deux dispositifs. Plusieurs protocoles de communication permettent d'obtenir cet état de connexion. Par exemple, le protocole UPnP propose, entre autres, deux mécanismes pour détecter la connexion et la déconnexion d'un équipement UPnP.

Selon un premier mécanisme, le deuxième dispositif, appelé point de contrôle dans le contexte de l'UPnP, émet des requêtes de découverte M-SEARCH en multicast au démarrage et ensuite de manière régulière. Suite à la réception de cette requête, le premier dispositif répond en unicast à ce point de contrôle. La réception d'une réponse issue d'un premier dispositif permet au deuxième dispositif de confirmer un état de connexion courant entre le premier et le deuxième dispositif. A l'inverse, si le deuxième dispositif ne reçoit pas de réponse à une requête M-SEARCH, le deuxième dispositif considère que le premier dispositif est déconnecté.

Un problème lié à l'utilisation du premier mécanisme est que le point de contrôle est souvent un équipement alimenté par une batterie (par exemple un smartphone) ; augmenter la fréquence d'envoi des requêtes M-SEARCH peut donc avoir pour conséquence une surconsommation énergétique non souhaitable pour ce deuxième dispositif.

Selon un deuxième mécanisme, le premier dispositif envoie au démarrage et de manière régulière des requêtes SSDP : Alive afin d'annoncer sa présence aux autres dispositifs. Ces messages successifs contiennent une donnée appelée « duration » (CACHE-CONTROL), décrite dans la norme UPnP, indiquant la durée de validité de l'annonce. Par défaut, la durée définie actuellement dans le protocole UPnP est de 1800 secondes. En d'autres mots, si à l'expiration de cette durée, le deuxième dispositif dit point de contrôle ne reçoit pas de requête SSDP : Alive, le deuxième dispositif considère alors que le premier dispositif est déconnecté. Or, il est nécessaire parfois de connaître l'état de connexion au plus vite.

Selon le contexte, la durée de 1800 secondes peut ne pas convenir. Un point de contrôle peut souhaiter connaître l'état de déconnexion plus vite sans attendre l'expiration du délai de 1800 secondes. Cependant, diminuer cette durée par exemple à 900 secondes peut être néfaste pour le premier dispositif si celui-ci est alimenté par une batterie ; en effet, l'augmentation de la fréquence d'envoi aurait pour effet d'épuiser prématurément la batterie si le niveau de charge de celle-ci était déjà faible. Le problème lié à l'utilisation du deuxième mécanisme est que le point de contrôle ne connait pas l'état de charge du premier dispositif ; il ne sait pas non plus si le premier équipement est sur secteur, c'est-à-dire connecté à un réseau électrique, ou alimenté par une batterie. Le document US8903458B1 décrit un procédé qui détermine au moins un état de la batterie ou un état d'accès au réseau d'un dispositif mobile. Une fréquence de rafraîchissement des données pour au moins une application exécutable par le dispositif mobile est définie par un serveur en fonction d'au moins un état de la batterie ou d'un état d'accès au réseau du dispositif mobile .

L'invention vient améliorer la situation.

### L'invention

Selon un premier aspect fonctionnel, l'invention a trait à un procédé de gestion tel que défini dans la revendication 1.

Ainsi, l'invention offre la possibilité de décider judicieusement des instants d'émission des messages à destination du deuxième dispositif de manière à s'adapter à un contexte particulier ; une modification des instants d'émission est précédée d'une prise en compte des niveaux de charge du premier et du deuxième dispositif.

On verra dans la suite plusieurs cas possibles, dans lesquels les niveaux de charges d'un seul dispositif ou des deux dispositifs sont pris en compte pour déterminer si oui ou non les instants d'émission des messages seront modifiés. Un cas possible dans lequel un seul niveau de charge est pris en compte est le cas par exemple où le deuxième dispositif est chargé par exemple à 100% ; dans cette configuration le premier dispositif ne modifie pas les instants d'émission ; à charge pour le deuxième dispositif de modifier son propre fonctionnement par exemple en augmentant lui-même les instants d'émission de messages M-SEARCH. Un autre cas possible est celui dans lequel les deux niveaux d'énergie du premier et du deuxième dispositif sont considérés ; par exemple lorsque le niveau d'énergie du deuxième dispositif n'est pas à 100% et est inférieur au niveau d'énergie du premier ; dans ce cas, dans l'exemple qui sera décrit ci-dessous, les instants seront modifiés. Les cas possibles ne se limitent bien évidemment pas à ceux décrits ci-dessus.

En définitive, l'invention permet de connaître l'état de connexion entre deux dispositifs tout en assurant une bonne gestion des niveaux de charge électrique des dispositifs, en particulier en évitant de solliciter un dispositif dont la charge électrique pourrait être trop faible pour réaliser la tâche demandée.

Suite à l'étape de réception, une étape de comparaison est réalisée entre le niveau de charge électrique du premier dispositif et le niveau de charge électrique du second dispositif ; les instants d'émission sont ensuite déterminés en fonction du résultat de l'étape de comparaison. Ce premier mode prend en compte le niveau de charge du premier et du second dispositif et permet de décider d'une modification ou non des instants d'émission des messages transmis par le premier dispositif à destination du deuxième dispositif.

L'étape de détermination comprend une modification des instants d'émission si le niveau de charge du premier dispositif est supérieur au niveau de charge du deuxième dispositif. Ce deuxième mode consiste à modifier les instants d'émission, par exemple la fréquence d'envoi, du premier dispositif que si le premier dispositif à un niveau de charge plus important, à charge pour le deuxième dispositif d'opter pour une autre solution si les instants ne sont pas modifiés comme demandé. Une autre solution consiste, par exemple, à augmenter la fréquence d'envoi de messages transmis par le deuxième dispositif tels que les messages M-SEARCH comme cela sera décrit ci-dessous.

La demande de modification visée ci-dessus inclut en outre des instants souhaités d'envoi des messages à destination du second dispositif ; dans cette configuration, lors de l'étape de détermination, les instants d'émission sont fixés aux instants souhaités. Ce mode est avantageux car c'est le deuxième dispositif qui propose des instants d'émission, en particulier une fréquence d'émission. Cela permet au premier dispositif de répondre à un besoin particulier souhaité par un deuxième dispositif.

Selon un mode de mise en oeuvre particulier de l'invention, qui pourra être mis en oeuvre alternativement ou cumulativement avec les précédents, l'étape de réception est suivie d'une étape de comparaison entre le niveau de charge électrique courant du premier dispositif et une valeur de charge électrique prédéfinie ; ensuite, l'étape de détermination a lieu si le niveau de charge courant est supérieur au niveau de charge prédéfinie. Cette caractéristique est avantageuse car le premier dispositif prend en compte son propre niveau d'énergie restante avant de décider de mettre en oeuvre l'étape de détermination. Cette caractéristique a pour avantage d'éviter au premier dispositif de consommer de l'énergie alors que son niveau d'énergie restant n'est pas suffisant.

Selon un mode de mise en oeuvre particulier de l'invention, qui pourra être mis en oeuvre alternativement ou cumulativement avec les précédents, l'étape de détermination est suivie d'une émission, à destination du deuxième dispositif, d'une information relative aux nouveaux instants d'émission fixés. Ce mode est intéressant car si le premier dispositif modifie ou pas la fréquence d'envoi des messages, le deuxième dispositif en est informé et peut décider de mettre en oeuvre, au niveau du deuxième dispositif, une solution apte à répondre à son besoin.

Selon un mode de mise en oeuvre particulier de l'invention, qui pourra être mis en oeuvre alternativement ou cumulativement avec les précédents, lorsque plusieurs demandes de modification sont reçues de plusieurs seconds dispositifs incluant des états électriques associés aux seconds dispositifs concernés et des durées souhaitées, respectivement, l'étape de détermination consiste à sélectionner des instants d'émission souhaités associés au deuxième dispositif ayant la valeur de niveau de charge électrique la plus basse. Cette caractéristique est avantageuse car les instants choisis seront ceux qui correspondent au second dispositif ayant le niveau d'énergie le plus bas parmi tous les niveaux d'énergie reçus. De cette manière le choix n'affecte pas le second dispositif choisi alors qu'une autre fréquence demandée par un autre deuxième dispositif aurait pu avoir pour effet de consommer trop d'énergie dans le second dispositif concerné.

Selon un mode de mise en oeuvre particulier de l'invention, qui pourra être mis en oeuvre alternativement ou cumulativement avec les précédents, si le niveau de charge du deuxième dispositif, d'où provient la demande de modification, est supérieur à un niveau de charge seuil, le premier dispositif conserve des instants d'émission prédéfinis. Ce mode est intéressant car le premier dispositif ne prend pas en compte une demande de modification lorsqu'elle provient d'un deuxième dispositif ayant un niveau de charge optimal et donc peut être branché sur un réseau électrique et donc apte gérer lui-même la fréquence d'émission de ses propres messages pour connaître l'état de connexion entre le premier et le deuxième dispositif ; par exemple en le deuxième dispositif peut augmenter la fréquence d'émission des messages M-SEARCH comme cela sera expliqué ci-dessous. Dans cette configuration, le premier dispositif évite de consommer de l'énergie et gagne donc en autonomie s'il est alimenté par une batterie.

Selon un premier aspect matériel, l'invention a trait à une entité de gestion des instants d'émission de messages depuis un premier dispositif à destination d'un deuxième dispositif telle que définie dans la revendication 5.

Selon un deuxième aspect matériel, l'invention a trait à un dispositif, dit premier dispositif, caractérisé en ce qu'il comprend une entité de gestion, dite première entité de gestion dans la suite, telle que définie ci-dessus.

Selon un troisième aspect matériel, l'invention a trait à un produit programme d'ordinateur comprenant des instructions de code de programme pour la mise en oeuvre d'un procédé de gestion défini dessus lorsqu'il est exécuté par un processeur.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 est un chronogramme illustrant un mode de réalisation d'une première phase du procédé de l'invention. Cette première phase a trait à une commande d'un contenu.
La figure 3A représente un tableau incluant des attributs présents dans une demande de modification et des décisions prises par les différentes entités présentes dans les dispositifs. Les figures 3B à 3D sont des tableaux incluant des valeurs d'attributs et des exemples de décisions représentatifs d'exemple de réalisation.
La figure 4 présente sous forme de schéma synoptique simplifié la structure d'un premier ou d'un deuxième dispositif selon la présente invention.

### Description détaillée de modes de réalisation illustrant l'invention

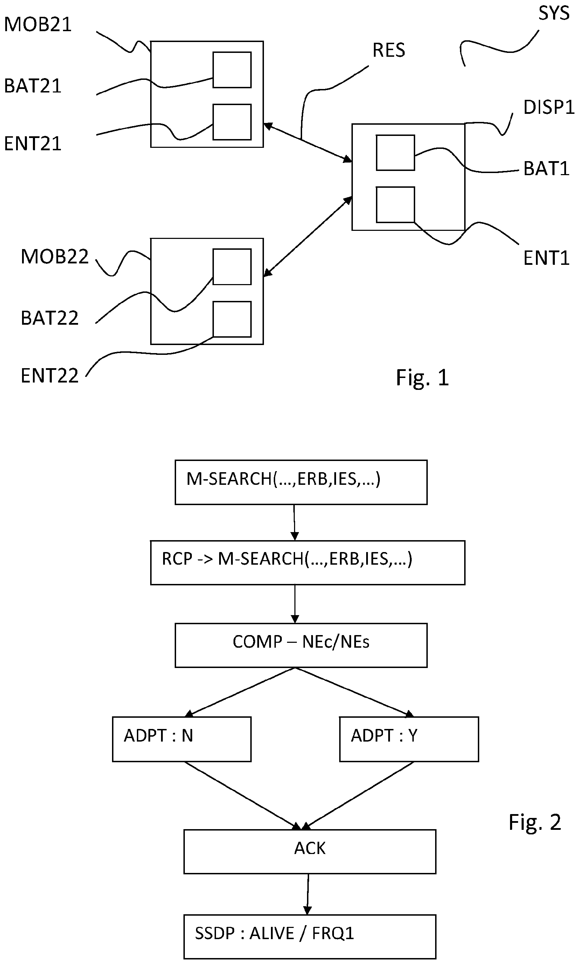

La figure 1 représente un système SYS comprenant un premier dispositif DISP1 et deux seconds dispositifs MOB21 et MOB22.

Le premier dispositif DISP1 et un second dispositif MOB21/MOB22 communiquent entre eux via une liaison de communication RES. Les dispositifs sont alimentés en énergie électrique au moyen d'une source d'énergie électrique. La source d'énergie est quelconque ; elle peut être issue d'un réseau électrique ou être embarquée dans les dispositifs comme par exemple des piles, batteries, etc.

L'invention est applicable à toutes sources d'énergie ; cependant, l'invention a un intérêt tout particulier lorsque l'un ou l'autre des dispositifs est alimenté au moyen d'une source électrique embarquée, par exemple une batterie, dont l'énergie diminue au fil du temps lorsque la batterie n'est pas rechargée. Dans notre exemple, les dispositifs sont alimentés en énergie électrique au moyen d'une source d'énergie électrique BAT.

Dans notre exemple, le premier dispositif DISP1 est un décodeur et les seconds dispositifs MOB21/MOB22 sont deux smartphones.

Une entité de gestion ENT1 installé dans le premier dispositif DISP1, a pour fonction de définir l'instant d'envoi des messages depuis le smartphone. On verra dans la suite que chaque point de contrôle MOBn a également une entité ENT2n (n est un entier) qui va gérer la fréquence d'envoi des messages M-SEARCH en fonction de la décision prise par l'entité de gestion ENT1. Dans notre exemple, le système SYS comprend deux entités ENT21 et ENT22 installés dans les smartphones MOB21 et MOB22, respectivement.

Le deuxième dispositif, MOB21 ou MOB22, et le premier dispositif DISP1 communiquent entre eux directement sans intermédiaire ou via un intermédiaire telle qu'une passerelle domestique.

Dans le cas où les deux dispositifs communiquent via une passerelle domestique, lors d'une étape préalable (non représentée), le premier et le deuxième dispositif peuvent aussi, au lieu de se connecter directement entre eux, se connecter dans un premier temps au réseau local, c'est-à-dire à la passerelle de service GTW du réseau local. Ensuite, une fois que les deux équipements sont connectés au réseau via la passerelle de service, ils établissent une communication entre eux via la passerelle.

Dans notre exemple, le protocole utilisé entre le deuxième et le premier dispositif est le protocole UPnP. Dans ce contexte, le deuxième dispositif joue le rôle du point de contrôle (ou « Control point » en anglais). Rappelons juste qu'un point de contrôle est un contrôleur qui est capable de découvrir et de commander des périphériques tels que le premier dispositif. Un point de contrôle émet classiquement vers les différents terminaux du réseau des messages dits de découverte (M-SEARCH) afin de récupérer en retour une description des dispositifs correspondants à la requête. Ces messages de découverte sont émis le plus souvent en mode de communication point vers multipoint, mode aussi appelé multicast, du point de contrôle vers les dispositifs. Un équipement terminal compatible avec la norme UPnP, par exemple le premier dispositif, répond à ces messages de requête, et émet de surcroît, à fréquence régulière, des messages de présence (SSDP:ALIVE) pour signifier qu'il est actif et connecté sur le réseau. Le point de contrôle du réseau local, qui est situé ici sur le dispositif mobile émet en mode multicast des messages de recherche (M-SEARCH).

La fréquence d'envoi des messages SSDP:ALIVE est fixée au préalable. Le protocole UPnP impose une fréquence d'envoi de 1800 secondes ; si au bout de cette durée, le point de contrôle n'a pas reçu de nouveaux SSDP:Alive alors le point de contrôle peut considérer que le premier dispositif est déconnecté.

De manière à détecter plus rapidement la déconnexion du dispositif de déport UPnP, l'invention propose de modifier les instants d'envoi des messages SSDP:ALIVE sous condition.

Selon l'invention, les étapes exécutées par l'entité de gestion ENT1 sont les suivantes :
a. une étape de réception d'une demande de modification des instants d'émission des messages à destination du premier dispositif, la demande incluant un niveau de charge électrique courant associé au deuxième dispositif (MOB21,MOB22) ;
b. une étape de détermination des instants d'émission en prenant en compte au moins le niveau de charge du deuxième dispositif.

Suite à l'étape de détermination, les instants d'émission peuvent être modifiés ou conservés.

Plus précisément selon un mode de réalisation, suite à l'étape de réception, le procédé comprend une étape de comparaison du niveau de charge électrique du premier dispositif et du niveau de charge électrique du second dispositif ; les instants d'émission sont ensuite déterminés en fonction du résultat de l'étape de comparaison. Par exemple, si le niveau de charge du premier dispositif est supérieur à celui du deuxième dispositif, alors dans ce cas le premier dispositif peut modifier les instants d'émission par exemple en augmentant la fréquence à une valeur de fréquence souhaitée par le deuxième dispositif dans le message M-SEARCH.

Selon l'invention, les messages transmis par les seconds dispositifs MOB21/MOB22, points de contrôle, incluent des attributs qui seront pris en compte par l'entité de gestion ENT1 pour décider des instants d'envoi de messages, en particulier des messages SSDP : Alive. Suite à la prise en compte, l'entité de gestion ENT1 exécute un algorithme d'adaptation dynamique de la fréquence d'envoi des messages. En définitive, l'entité ENT1 décide si la fréquence doit être modifiée (diminuée ou augmentée) ou maintenue à la même valeur.

La figure 2 est une vue schématique des différentes étapes d'un mode de réalisation du procédé de l'invention.

Les étapes sont les suivantes ; Pour simplifier l'exposé, les étapes seront décrites en référence à un point de contrôle par exemple le smartphone MOB21. L'autre point de contrôle MOB22 réalise les mêmes étapes que le premier point de contrôle à la seule différence que les valeurs des attributs peuvent différées.

Lors d'une première étape ET1, le deuxième dispositif MOB21 émet un M-SEARCH(...,ERB,IES,...) incluant plusieurs attributs dont les suivants :
- un premier deuxième attribut ERB afin d'indiquer au premier dispositif l'énergie restante de la batterie du deuxième dispositif MOB21, par exemple sous forme de pourcentage : 100%, 50%, 10%.
- un deuxième attribut IES afin d'indiquer au premier dispositif DISP1, les instants d'émission souhaités des messages par le premier dispositif, par exemple toutes les X secondes pour indiquer que le control point souhaite recevoir des SSDP Alive toutes les X secondes.

Lors d'une deuxième étape ET2, le premier dispositif DISP1 reçoit RCP le message M-SEARCH(...,ERB,IES,...) provenant du deuxième dispositif et récupère les attributs en particulier l'attribut ERB et l'attribut IES.

Ensuite, en fonction des contraintes énergétiques reçues du deuxième dispositif MOB21, à savoir le niveau d'énergie électrique restante du deuxième dispositif MOB21, et du niveau d'énergie électrique restante du premier dispositif DISP1, le premier dispositif décide d'adapter ADPT ou non la fréquence d'envoi des messages SSDP :Alive à destination du deuxième dispositif.

Dans notre exemple de réalisation, un niveau d'énergie seuil NEs est préalablement défini.

Lors d'une troisième étape ET3, le module ENT1 compare COMP le niveau énergétique courant NEc du premier dispositif DISP1 au niveau d'énergie seuil NEs.

Si le niveau énergétique courant NEc est inférieur au niveau d'énergie seuil NEs (étape 4a), dans notre exemple, le premier dispositif n'adapte pas la fréquence d'envoi. En d'autres mots, la fréquence d'envoi est conservée.

Si le niveau énergétique courant NEc est supérieur au niveau d'énergie seuil NEs (étape 4b), dans notre exemple, le premier dispositif adapte la fréquence d'envoi en augmentant la fréquence d'envoi avec une fréquence correspondant au deuxième attribut IES défini ci-dessus.

Une fois la fréquence d'envoi fixée, le premier dispositif transmet, lors d'une cinquième étape ET5, au deuxième dispositif MOB21 un message d'acquittement ACK avec comme paramètre la nouvelle durée fixée par le premier dispositif. Ce message d'acquittement permet au deuxième dispositif d'adapter son propre fonctionnement dès réception de ce message d'acquittement sans attendre la réception d'un message SSDP : Alive.

Un tel message d'acquittement est du type :
*HTTP*/*1.1200 OK*
*CACHE-CONTROL: max-age = seconds unti*/ *advertisement expires*
*DATE: when response was generated*
*EXT:*
*LOCATION: URL for UPnP description for root device*
*SER VER: OS*/*version UPnP*/*1.0 product*/*version*
*ST: search target*
*USN: advertisement UUID*
le paramètre « max-age » indique la nouvelle fréquence d'envoi des messages SSDP : Alive.

Ensuite, lors d'une sixième étape ET6, le premier dispositif transmet des messages SSDP : Alive avec la fréquence fixée FRQ1.

Un tel message SSDP : Alive peut prendre la forme suivante :
*NOTIFY* * *HTTP*/*1.1*
*HOST: 239.255.255.250:1900*
*CACHE-CONTROL: max-age = seconds until advertisement expires*
*LOCATION: URL for UPnP description for root device*
*NT: search target*
NTS: *ssdp:alive*
*SERVER: OS*/*version UPnP*/*1. 0 product*/*version*
*USN: advertisement UUID*

Comme indiqué précédemment, l'invention s'applique à un nombre indéterminé de seconds dispositifs MOB2n. Si on considère deux seconds dispositifs MOB21, MOB22 émettant lors de la première étape des messages M-SEARCH(...,ERB,IES,...) différents à destination du premier dispositif ; dans ce cas, si les premiers attributs ERB reçus sont différents, le premier dispositif DISP1 sélectionne un premier attribut parmi les premiers attributs reçus, par exemple celui correspondant au deuxième dispositif ayant le moins d'énergie restante.

Optionnellement, suite à la fixation de la nouvelle fréquence d'envoi FRQ des messages SSDP : Alive par le premier dispositif DISP1, dans notre exemple, chaque point de contrôle MOB21/MOB22 va prendre en compte cette nouvelle valeur et procéder à l'adaptation de ses propres paramètres d'envoi de messages M-SEARCH en particulier de la fréquence d'envoi des messages M-SEARCH. Si le système comprend deux points de contrôles MOB21/MOB22, chaque point peut modifier les fréquences FRQ21/FRQ22 d'envoi des messages M-SEARCH, respectivement.

Plus précisément, lors de l'étape 4b, dans notre exemple, si le premier dispositif adapte la fréquence d'envoi en augmentant la fréquence d'envoi avec une fréquence correspondant au deuxième attribut IES d'un premier point de contrôle MOB21, Le second point de contrôle MOB22 peut ensuite en fonction de la fréquence fixée adapter sa fréquence d'émission de messages M-SEARCH. Par exemple, si la fréquence fixée FRQ1 par le premier dispositif est inférieure à la valeur de l'attribut IES demandé par le second dispositif concerné MOB22; dans ce cas, le second dispositif concerné MOB22 peut désactiver l'envoi des messages M-SEARCH. A l'inverse, si la fréquence fixée est supérieure, le deuxième dispositif concerné MOB22 peut modifier la fréquence d'envoi des M-SEARCH à l'attribut demandé IES dans le message M-SEARCH transmis au premier dispositif DISP1.

A noter que la gestion des instants d'envoi des messages est réalisée par une autre entité de gestion. Dans la suite, l'entité de gestion qui gère l'instant d'envoi des messages SSDP : Alive est appelé première entité de gestion ENT1 ; et l'entité de gestion qui gère l'instant d'envoi des messages M-SEARCH est appelé seconde entité de gestion ENT2n.

Des exemples vont être décrits ci-dessous pour mettre en oeuvre l'algorithme décrit en référence à la figure 2.

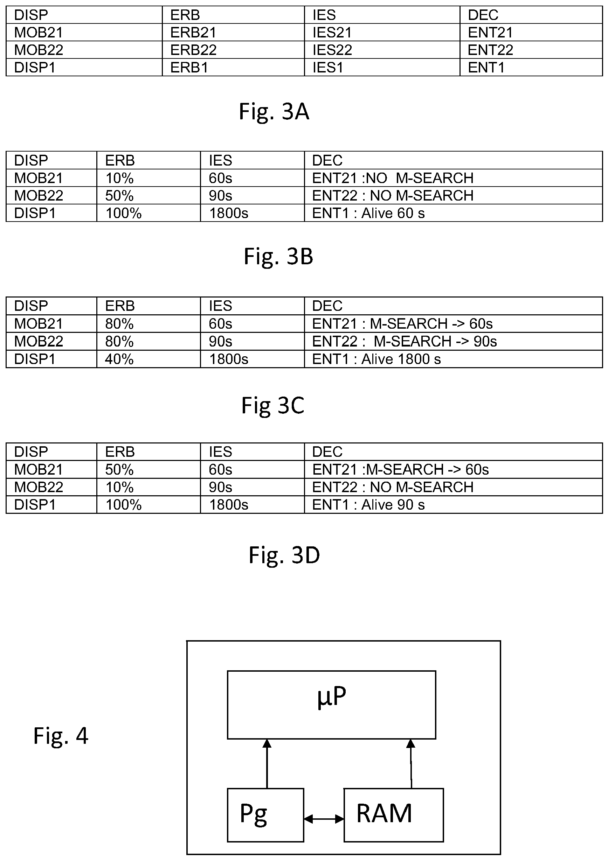

En référence à la figure 3A, les exemples sont décrits à l'aide d'un tableau incluant plusieurs colonnes :
- une première colonne DISP comprenant les dispositifs concernés MOB21, MOB22, DISP1
- une deuxième colonne ERB comprenant les attributs ERB de chaque dispositif respectivement : ERB21, ERB22, ERB1
- une troisième colonne IES comprenant les attributs IES de chaque dispositif respectivement : IES21, IES22, IES1
- une quatrième colonne DEC relative à la décision prise par l'entité de gestion ENT21, ENT22, ENT1 du dispositif concerné MOB21, MOB22, DISP1 respectivement.

Plusieurs exemples vont être décrits en référence aux figures 3B à 3D avec des valeurs d'attributs ERB et IES associés à chaque dispositif impliqué. Dans cet exemple, on suppose que le système informatique SYS comprend deux points de contrôle illustrés au moyen de deux dispositifs mobiles MOB21 et MOB22. Le tableau indique également dans la dernière colonne la décision prise par chacun des dispositifs.

Dans tous ces exemples de réalisation, un niveau d'énergie seuil NEs = 50% est préalablement défini.

Un premier exemple est illustré sur la figure 3B représentant le tableau décrit à la figure 3A compété par des valeurs d'attributs et des décisions prises par les entités.

Dans ce premier exemple, Le premier dispositif et chargé à 100% ; ce premier dispositif est par exemple un décodeur branché sur le secteur.

Le premier dispositif reçoit le message M-SEARCH(...,ERB,IES,...) provenant du deuxième dispositif et récupère les attributs ERB et IES de chaque second dispositif MOB21,MOB22 :
Pour le deuxième dispositif MOB21
   - ERB = 10% signifiant que la batterie du deuxième dispositif MOB21 est à 10% d'énergie restante ;
   - IES = 60s, signifiant que le deuxième dispositif souhaite recevoir les messages SSDP Alive toutes les 60s au lieu de 1800s.
Pour le deuxième dispositif MOB22
   - ERB = 50% signifiant que la batterie du deuxième dispositif MOB21 est à 50% d'énergie restante ;
   - IES = 90s, signifiant que le deuxième dispositif souhaite recevoir les messages SSDP Alive toutes les 90s au lieu de 1800s.

Le module ENT1 compare le niveau énergétique courant NEc du premier dispositif DISP1 au niveau d'énergie seuil NEs du deuxième dispositif concerné. Le niveau NEC est à 100% donc supérieur au niveau NEs de 50%.

Dans ce cas, le premier dispositif DISP1 adapte la fréquence d'envoi en augmentant la fréquence d'envoi avec une fréquence correspondant au premier attribut défini ci-dessus.

Comme plusieurs deuxièmes dispositifs MOB21, MOB22 sont concernés, le premier dispositif sélectionne un premier attribut parmi les premiers attributs reçus, par exemple celui correspondant au deuxième dispositif ayant le moins d'énergie restante à savoir 60s.

Une fois la fréquence d'envoi fixée, le premier dispositif transmet, au deuxième dispositif MOB21 un message d'acquittement du type décrit ci-dessus.

Ensuite, le premier dispositif transmet des messages SSDP : Alive avec la fréquence fixée de 60s.

En complément, en fonction de la fréquence fixée par le premier dispositif DISP1, les deuxièmes dispositifs MOB21 et MOB22 décident ou non de transmettre un message M-SEARCH ou d'adapter la fréquence d'envoi de ce message. Dans le cas présent, la durée fixée par le premier dispositif est inférieure ou égale aux valeurs d'attributs reçus IES. Dans ce cas les points de contrôle désactivent l'envoi des messages M-SEARCH respectivement.

Un deuxième exemple est illustré sur la figure 3C représentant le tableau décrit à la figure 3A compété par des valeurs d'attributs et des décisions prises par les entités.

Dans ce deuxième exemple, Le premier dispositif est chargé à 40%. Ce premier dispositif pourrait être un téléphone mobile équipé d'une batterie.

Le premier dispositif DISP1 reçoit le message M-SEARCH(...,ERB,IES,...) provenant du deuxième dispositif et récupère les attributs ERB et IES relatifs à chaque dispositif MOB21 et MOB22 :
Pour le deuxième dispositif MOB21
   - ERB = 80% signifiant que la batterie du deuxième dispositif MOB21 est à 80% d'énergie restante ;
   - IES = 90s, signifiant que le deuxième dispositif souhaite recevoir les messages SSDP Alive toutes les 90s au lieu de 1800s.
Pour le deuxième dispositif MOB22
   - ERB = 50% signifiant que la batterie du deuxième dispositif MOB21 est à 50% d'énergie restante ;
   - IES = 1800s, signifiant que le deuxième dispositif souhaite recevoir les messages SSDP Alive toutes les 1800s.

Ensuite, en fonction des contraintes énergétiques reçues du deuxième dispositif MOB21, à savoir le niveau d'énergie électrique restante du deuxième dispositif, et du niveau d'énergie électrique restante du premier dispositif, le premier dispositif décide d'adapter ou non la fréquence d'envoi des messages SSDP :Alive à destination du deuxième dispositif. En l'espèce, le module ENT1 compare le niveau énergétique courant NEc du premier dispositif DISP1 au niveau d'énergie seuil NEs.

Dans ce deuxième exemple, le niveau énergétique courant NEc (40%) est inférieur au niveau d'énergie seuil NEs (50%). Dans notre exemple, le premier dispositif n'adapte pas la fréquence d'envoi. En d'autres mots, la fréquence d'envoi de 1800s est conservée.

Une fois la fréquence d'envoi fixée, le premier dispositif transmet, au deuxième dispositif MOB21 un message d'acquittement et transmet ensuite des messages SSDP : Alive avec la fréquence fixée de 1800s.

Optionnellement, une fois la nouvelle durée fixée, les points de contrôle vont procéder à l'adaptation de la fréquence d'envoi des messages M-SEARCH. La durée d'envoi des messages SSDP : Alive (1800s) est supérieure aux durées demandées à savoir 60s et 90s. Dans ce cas, les deuxièmes dispositifs décident de modifier la fréquence d'envoi des M-SEARCH à 60s et 90s respectivement, ce afin de répondre à leur besoin.

Un troisième exemple est illustré sur la figure 3D représentant le tableau décrit à la figure 3A compété par des valeurs d'attributs et des décisions prises par les entités.

Dans ce troisième exemple, Le premier dispositif est encore une fois chargé à 100% comme dans le premier exemple.

Le premier dispositif reçoit le message M-SEARCH(...,ERB,IES,...) provenant du deuxième dispositif et récupère les attributs ERB et IES relatifs à chaque dispositif MOB21 et MOB22 :
Pour le deuxième dispositif MOB21
   - ERB = 50% signifiant que la batterie du deuxième dispositif MOB21 est à 50% d'énergie restante ;
   - IES = 60s, signifiant que le deuxième dispositif souhaite recevoir les messages SSDP Alive toutes les 60s au lieu de 1800s.
Pour le deuxième dispositif MOB22
   - ERB = 10% signifiant que la batterie du deuxième dispositif MOB21 est à 100% d'énergie restante ;
   - IES = 90s, signifiant que le deuxième dispositif souhaite recevoir les messages SSDP Alive toutes les 90s.

Ensuite, en fonction des contraintes énergétiques reçues du deuxième dispositif MOB21, à savoir le niveau d'énergie électrique restante du deuxième dispositif, et du niveau d'énergie électrique restante du premier dispositif, le premier dispositif décide d'adapter ou non la fréquence d'envoi des messages SSDP :Alive à destination du deuxième dispositif. En l'espèce, le module ENT1 compare le niveau énergétique courant NEc du premier dispositif DISP1 au niveau d'énergie seuil NEs.

Dans ce troisième exemple, le niveau énergétique courant NEc (100%) est supérieur au niveau d'énergie seuil NEs (50%). Dans notre exemple, le premier dispositif va donc adapter la fréquence d'envoi en la fixant à 90s.

Optionnellement, une fois la nouvelle durée fixée par le premier dispositif DISP1, les points de contrôle vont , en fonction de la durée fixée, adapter la fréquence d'envoi des messages M-SEARCH en conséquence ou pas.

Dans notre exemple, la fréquence utilisée par le deuxième dispositif MOB21 est 60s ; cette fréquence est inférieure à la durée fixée de 90s. En conséquence, le deuxième dispositif modifie sa fréquence d'envoi des messages M-SEARCH à 60s.

Dans notre exemple, la fréquence utilisée par le deuxième dispositif MOB21 est 90s. A l'inverse du deuxième dispositif MOB21, le deuxième dispositif MOB22 ne modifie pas la fréquence d'envoi des messages M-SEARCH car la fréquence qu'il utilise est égale à la fréquence fixée par le premier dispositif DISP1.

Les points de contrôle peuvent aussi être alimentés autrement que par une batterie ; ils peuvent être alimentés par un réseau électrique. Dans ce cas, en supposant que le premier dispositif est alimenté avec une batterie, le premier module ENT1 requiert aux points de contrôle de modifier sa propre fréquence d'envoi des messages M-SEARCH de manière à ne pas consommer l'énergie du premier dispositif ; le premier dispositif peut dans ce cas conserver la fréquence d'envoi des messages SSDP : Alive voire diminuer la fréquence d'envoi.

A noter que la gestion des instants d'envoi des messages est réalisée par une autre entité de gestion. Dans la suite, l'entité de gestion qui gère l'instant d'envoi des messages SSDP : Alive est appelé première entité de gestion ENT1 ; et l'entité de gestion qui gère l'instant d'envoi des messages M-SEARCH est appelé seconde entité de gestion ENT2n.

D'autre part, lorsqu'un deuxième dispositif MOB21/MOB22 est sur secteur, l'attribut ERB est fixé à 100% sans qu'il soit nécessaire de réaliser un calcul. L'attribut peut alors avoir comme valeur 100% ou toute autre information qui sera comprise par le premier dispositif comme étant un dispositif alimenté sur secteur.

En variante, plutôt que d'utiliser un attribut ERB dans le message M-SEARCH, le premier dispositif, avec ou sans l'aide de la passerelle domestique décrite ci-dessus, pourrait essayer de déterminer par d'autres moyens la classe énergétique du dispositif concerné et son niveau de batterie. En particulier, on pourrait détecter les dispositifs sur secteur afin de leur attribuer une énergie à 100%.

Par exemple, la détection d'un dispositif sur secteur peut consister à récupérer le nom DHCP, ou le nom DNS et déterminer avec ces noms si le dispositif concerné est par exemple un smartphone donc probablement sur batterie, ou un ordinateur fixe donc sur secteur.

La détection d'un dispositif sur secteur peut aussi consister à déterminer un type de connexion utilisé par un dispositif : Ethernet, WiFi, etc. Si la connexion est une connexion Ethernet, cela signifie probablement que le dispositif en question est un ordinateur sur secteur.

La détection d'un dispositif sur secteur peut aussi consister à déterminer la durée de connexion au réseau du dispositif. Par exemple, si la connexion n'a pas été interrompue depuis plusieurs jours, cela signifie que le dispositif est probablement alimenté sur secteur.

Enfin, la détection d'un dispositif sur secteur peut aussi consister à calculer l'évolution de la force du signal provenant du dispositif. Si la force est quasi constante, on peut conclure que le dispositif ne bouge pas et est donc probablement un PC, un décodeur, etc ... connecté en WiFi et alimenté sur secteur

Dans notre exemple, les entités de gestion sont installées dans les dispositifs concernés mais peuvent très bien être situés hors des dispositifs, par exemple sur un serveur apte à communiquer avec un dispositif.

Précisons ici que les dispositifs MOB21/MOB22/DISP1 ont tous l'architecture matérielle d'un ordinateur conventionnel. Ils comportent notamment un processeur PRO, une mémoire vive de type RAM et une mémoire morte dans laquelle est enregistré un programme d'ordinateur Pg conforme à l'invention. Le premier dispositif comprend un programme Pg comportant des instructions pour exécuter les étapes du procédé dont l'organigramme est donné à la figure 2.

Dans notre exemple, le programme stocké dans le premier dispositif DISP1 est l'entité ENT1 ; le programme stocké dans les deuxièmes dispositifs MOB21/MOB22 sont des entités ENT21/ENT22, respectivement.

Précisons ici que le terme module ou entité peut correspondre aussi bien à un composant logiciel, un programme d'ordinateur, qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Enfin, pour la réalisation de l'invention, la première entité de gestion ENT1 comprend
a. un module de réception d'une demande de modification des instants d'émission des messages, la demande incluant le niveau de charge électrique courant associé au deuxième dispositif MOB21,MOB22 ;
b. un module de détermination des instants d'émission en prenant en compte les niveaux de charge du premier et/ou du deuxième dispositif.

Pour la réalisation de l'invention, une deuxième entité de gestion ENT21/ENT22 comprend
a. un module d'émission d'une demande de modification des instants d'émission des messages, la demande incluant le niveau de charge électrique courant associé au deuxième dispositif ;
b. un module de réception d'une information relative aux nouveaux instants d'émission fixés par le premier dispositif ;
c. un module de comparaison des instants d'émission reçus du premier dispositif avec les instants courants utilisés par le deuxième dispositif ;
d. un module d'adaptation des instants d'émission des messages transmis par le deuxième dispositif en fonction de l'étape de comparaison.

Les exemples sont été décrits avec plusieurs deuxièmes dispositifs ; cependant, le principe de l'invention s'applique à un nombre indéterminé de deuxième dispositif.

## Revendications

1. Procédé de gestion des instants d'émission de messages depuis un premier dispositif (DISP1) à destination d'un deuxième dispositif (MOB21,MOB22), les dispositifs ayant des niveaux de charge électrique respectifs à un instant donné, le procédé comprenant:
a. une étape de réception, par le premier dispositif (DISP1), d'une demande de modification des instants d'émission des messages, la demande incluant le niveau de charge électrique courant associé au deuxième dispositif (MOB21,MOB22) ; la demande incluant en outre un attribut représentatif d'instants souhaités d'envoi de messages depuis le premier dispositif à destination du second dispositif ;
b. une étape de comparaison du niveau de charge électrique du premier dispositif et du niveau de charge électrique du second dispositif,
c. une étape de détermination des instants d'émission des messages depuis le premier dispositif en fonction du résultat de l'étape de comparaison entre les niveaux de charge du premier et du deuxième dispositif, les instants d'émission étant les instants souhaités si le niveau de charge du premier dispositif est supérieur au niveau de charge du deuxième dispositif.

2. Procédé de gestion selon la revendication 1, **caractérisé en ce que** l'étape de réception est suivie d'une étape de comparaison entre le niveau de charge électrique courant (NEc) du premier dispositif et une valeur de charge prédéfinie (NEs), et **en ce que** l'étape de détermination a lieu si le niveau de charge courant est supérieur au niveau de charge prédéfinie.

3. Procédé de gestion selon la revendication 1, **caractérisé en ce que** l'étape de détermination est suivie d'une émission, à destination du deuxième dispositif, d'une information relative aux nouveaux instants d'émission fixés.

4. Procédé selon la revendication 3, **caractérisé en ce que** lorsque plusieurs demandes de modification sont reçues de plusieurs seconds dispositifs (MOB21, MOB22), incluant des états électriques associés aux seconds dispositifs concernés et des durées souhaitées, respectivement, l'étape de détermination consiste à sélectionner des instants d'émission souhaités associés au deuxième dispositif ayant la valeur de niveau de charge électrique la plus basse.

5. Entité de gestion (ENT1) des instants d'émission de messages depuis un premier dispositif (DISP1) à destination d'un deuxième dispositif (MOB21,MOB22), les dispositifs ayant des niveaux de charge électrique respectifs à un instant donné, l'entité comprenant:
a. un module de réception d'une demande de modification des instants d'émission des messages, la demande incluant le niveau de charge électrique courant associé au deuxième dispositif (MOB21,MOB22) ; la demande incluant en outre un attribut représentatif d'instants souhaités d'envoi de messages depuis le premier dispositif à destination du second dispositif ;
b. un module de comparaison du niveau de charge électrique du premier dispositif et du niveau de charge électrique du second dispositif,
c. un module de détermination des instants d'émission apte à déterminer les instants d'émission des messages depuis le premier dispositif en fonction du résultat de l'étape de comparaison entre les niveaux de charge du premier et du deuxième dispositif, les instants d'émission étant les instants souhaités si le niveau de charge du premier dispositif est supérieur au niveau de charge du deuxième dispositif.

6. Dispositif, dit premier dispositif, **caractérisé en ce qu'**il comprend une entité de gestion telle que définie dans la revendication 5.

7. Produit programme d'ordinateur comprenant des instructions de code de programme pour la mise en oeuvre d'un procédé de gestion selon l'une quelconque des revendications 1 à 4, lorsqu'il est exécuté par un processeur.

## Patentansprüche

1. Verfahren zur Verwaltung der Sendezeitpunkte von Nachrichten von einer ersten Vorrichtung (DISP1) an eine zweite Vorrichtung (MOB21,MOB22), wobei die Vorrichtungen jeweilige elektrische Ladeniveaus zu einem gegebenen Zeitpunkt haben, wobei das Verfahren umfasst:
a. einen Schritt des Empfangens, durch die erste Vorrichtung(DISP1), einer Anforderung zur Änderung der Sendezeitpunkte der Nachrichten, wobei die Anforderung das der zweiten Vorrichtung (MOB21,MOB22) zugeordnete aktuelle elektrische Ladeniveau beinhaltet; wobei die Anforderung ferner ein Attribut beinhaltet, das für gewünschte Sendezeitpunkte von Nachrichten von der ersten Vorrichtung an die zweite Vorrichtung repräsentativ ist;
b. einen Schritt des Vergleichens des elektrischen Ladeniveaus der ersten Vorrichtung und des elektrischen Ladeniveaus der zweiten Vorrichtung,
c. einen Schritt des Bestimmens der Sendezeitpunkte der Nachrichten von der ersten Vorrichtung in Abhängigkeit von dem Ergebnis des Schritts des Vergleichens der Ladeniveaus der ersten und der zweiten Vorrichtung, wobei die Sendezeitpunkte die gewünschten Zeitpunkte sind, wenn das Ladeniveau der ersten Vorrichtung über dem Ladeniveau der zweiten Vorrichtung liegt.

2. Verfahren zur Verwaltung nach Anspruch 1, **dadurch gekennzeichnet, dass** auf den Schritt des Empfangens ein Schritt des Vergleichens des aktuellen elektrischen Ladeniveaus (NEc) der ersten Vorrichtung und eines vorgegebenen Ladewerts (NEs) folgt, und dadurch, dass der Schritt des Bestimmens stattfindet, wenn das aktuelle Ladeniveau über dem vorgegebenen Ladeniveau liegt.

3. Verfahren zur Verwaltung nach Anspruch 1, **dadurch gekennzeichnet, dass** auf den Schritt des Bestimmens ein Senden, an die zweite Vorrichtung, einer Information bezüglich der festgelegten neuen Sendezeitpunkte folgt.

4. Verfahren nach Anspruch 3, **dadurch gekennzeichnet, dass**, wenn mehrere Anforderungen zur Änderung von mehreren zweiten Vorrichtungen (MOB21, MOB22) empfangen werden, die jeweils den betreffenden zweiten Vorrichtungen zugeordnete elektrische Zustände und gewünschte Zeitdauern beinhalten, der Schritt des Bestimmens darin besteht, gewünschte Sendezeitpunkte auszuwählen, die der zweiten Vorrichtung zugeordnet sind, die den niedrigsten Wert des elektrischen Ladeniveaus hat.

5. Einheit (ENT1) zur Verwaltung der Sendezeitpunkte von Nachrichten von einer ersten Vorrichtung (DISP1) an eine zweite Vorrichtung (MOB21,MOB22), wobei die Vorrichtungen jeweilige elektrische Ladeniveaus zu einem gegebenen Zeitpunkt haben, wobei die Einheit umfasst:
a. ein Modul zum Empfangen einer Anforderung zur Änderung der Sendezeitpunkte der Nachrichten, wobei die Anforderung das der zweiten Vorrichtung (MOB21,MOB22) zugeordnete aktuelle elektrische Ladeniveau beinhaltet; wobei die Anforderung ferner ein Attribut beinhaltet, das für gewünschte Sendezeitpunkte von Nachrichten von der ersten Vorrichtung an die zweite Vorrichtung repräsentativ ist;
b. ein Modul zum Vergleichen des elektrischen Ladeniveaus der ersten Vorrichtung und des elektrischen Ladeniveaus der zweiten Vorrichtung,
c. ein Modul zum Bestimmen der Sendezeitpunkte, das geeignet ist, die Sendezeitpunkte der Nachrichten von der ersten Vorrichtung in Abhängigkeit von dem Ergebnis des Schritts des Vergleichens der Ladeniveaus der ersten und der zweiten Vorrichtung zu bestimmen, wobei die Sendezeitpunkte die gewünschten Sendezeitpunkte sind, wenn das Ladeniveau der ersten Vorrichtung über dem Ladeniveau der zweiten Vorrichtung liegt.

6. Vorrichtung, erste Vorrichtung genannt, **dadurch gekennzeichnet, dass** sie eine Einheit zur Verwaltung wie in Anspruch 5 definiert umfasst.

7. Computerprogrammprodukt, das Programmcodeanweisungen umfasst, die bei seiner Ausführung durch einen Prozessor das Verfahren zur Verwaltung nach einem der Ansprüche 1 bis 4 durchführen.

## Claims

1. Method for managing the transmission times of messages from a first device (DISP1) to a second device (MOB21, MOB22), the devices having respective levels of electric charge at a given time, the method comprising:
a. a step of the first device (DISP1) receiving a request to modify the transmission times of the messages, the request including the current level of electric charge associated with the second device (MOB21, MOB22); the request furthermore including an attribute representative of desired sending times of messages from the first device to the second device;
b. a step of comparing the level of electric charge of the first device and the level of electric charge of the second device,
c. a step of determining the transmission times of the messages from the first device on the basis of the result of the step of comparing the levels of charge of the first and second devices, the transmission times being the desired times if the level of charge of the first device is greater than the level of charge of the second device.

2. Management method according to Claim 1, **characterized in that** the reception step is followed by a step of comparing the current level of electric charge (NEc) of the first device and a predefined charge value (NEs), and **in that** the determination step takes place if the current level of charge is greater than the predefined level of charge.

3. Management method according to Claim 1, **characterized in that** the determination step is followed by transmission, to the second device, of information in relation to the new set transmission times.

4. Method according to Claim 3, **characterized in that**, when several modification requests are received from several second devices (MOB21, MOB22), including electrical statuses associated with the second devices in question and desired durations, respectively, the determination step consists in selecting desired transmission times associated with the second device that has the lowest level of electric charge value.

5. Entity (ENT1) for managing the transmission times of messages from a first device (DISP1) to a second device (MOB21, MOB22), the devices having respective levels of electric charge at a given time, the entity comprising:
a. a module for receiving a request to modify the transmission times of the messages, the request including the current level of electric charge associated with the second device (MOB21, MOB22); the request furthermore including an attribute representative of desired sending times of messages from the first device to the second device;
b. a module for comparing the level of electric charge of the first device and the level of electric charge of the second device,
c. a transmission time determination module, able to determine the transmission times of the messages from the first device on the basis of the result of the step of comparing the levels of charge of the first and second devices, the transmission times being the desired times if the level of charge of the first device is greater than the level of charge of the second device.

6. Device, called first device, **characterized in that** it comprises a management entity as defined in Claim 5.

7. Computer program product comprising program code instructions for implementing a management method according to any one of Claims 1 to 4 when it is executed by a processor.
